## Europäisches Patentamt

## European Patent Office

## Office européen des brevets

(11) Veröffentlichungsnummer: **0 045 000**
**A1**

# EUROPÄISCHE PATENTANMELDUNG

(21) Anmeldenummer: **81105471.7**

(22) Anmeldetag: **13.07.81**

(51) Int. Cl.³: **H 01 H 85/24**

(30) Priorität: **25.07.80 DE 3028286**

(43) Veröffentlichungstag der Anmeldung: **03.02.82**
**Patentblatt 82/5**

(84) Benannte Vertragsstaaten: **AT BE DE FR IT**

(71) Anmelder: **SIEMENS AKTIENGESELLSCHAFT Berlin und München, Postfach 22 02 61, D-8000 München 22 (DE)**

(72) Erfinder: **Kost, Franz, Gerickestrasse 18, D-8400 Regensburg (DE)**

(54) **Plombierbare Schraubkappe bei Sicherungen.**

(57) Die Erfindung betrifft eine plombierbare Schraubkappe zum Abdecken der Sicherungseinsätze von Schraubsicherungen. Nach der Erfindung ist vorgesehen, daß bei
Schraubkappen (1) mit im wesentlichen zylindrischem
Außenmantel in der Stirnseite zumindest ein Schlitz (2)
in Durchmesserrichtung ausgebildet ist.

EP 0 045 000 A1

SIEMENS AKTIENGESELLSCHAFT          Unser Zeichen 0045000
Berlin und München                  VPA 80 P 4 0 26 E


## Plombierbare Schraubkappe bei Sicherungen

Die Erfindung bezieht sich auf eine plombierbare Schraubkappe zum Abdecken der Sicherungseinsätze von Schraubsicherungen. Solche Sicherungen werden hauptsächlich in der
Hausinstallation verwandt.

Die bisher gebräuchlichsten Schraubkappen sind entweder
pilzförmig ausgebildet, so daß der Schaft der Schraubkappe im Durchmesser kleiner als der Kopf der Schraubkappe
ist. Bei solchen Sicherungen kann in senkrechter Richtung, also parallel zur gedachten Achse, ein Plombierloch mitgepreßt oder gebohrt werden. Andere bisher gebräuchliche Schraubkappen sind sternförmig ausgebildet,
so daß durch die schmalen Stege am Sternende eine Querbohrung ausgebildet werden kann.

Bei neueren Schraubkappen mit verringertem Durchmesser
bzw. verringerter Bauhöhe verbleibt in dem im wesentlichen
zylindrischen Außenmantel keine Möglichkeit für ein in
bisheriger Weise ausgebildetes Plombierloch.

Der Erfindung liegt die Aufgabe zugrunde, eine Schraubkappe mit im wesentlichen zylindrischem Außenmantel
plombierbar auszubilden.

Die Lösung der geschilderten Aufgabe besteht darin, daß
bei solchen Schraubkappen, mit im wesentlichen zylindrischem Außenmantel in der Stirnseite zumindest ein

No 2 Rat / 14.07.1980

Schlitz in Durchmesserrichtung ausgebildet ist. Durch einen solchen Schlitz kann man einen Plombierdraht hindurchlegen, der durch Löcher in Halterungen neben der Schraubkappe hindurchgeführt und ortsfest fixiert werden kann.

Man kann eine Vielzahl solcher Schlitze sternförmig jeweils in Durchmesserrichtung ausbilden. Durch einen Schlitz mit seitlich zum Rand hin zunehmender Tiefe ist die plombierte Schraubkappe besonders wirkungsvoll gegen Verdrehen gesichert.

Eine Weiterbildung besteht darin, daß der Schlitz im Mittelfeld der Stirnseite zumindest einen Steg tunnelartig unterläuft. Dadurch ist ein Plombierdraht besonders gut gegen unerlaubtes Entfernen gesichert. Nach einer Ausgestaltung ist im Mittelfeld ein ringförmiger Steg ausgebildet, der ein Sichtloch umrundet und zwei in Durchmesserrichtung gegenüberliegende Durchführungstunnel bildet.

Die Erfindung soll anhand von in der Zeichnung grob schematisch wiedergegebenen Ausführungsbeispielen näher erläutert werden:

In Fig. 1 ist abgebrochen wiedergegeben eine Schraubkappe in einem Sicherungsgehäuse im Längsschnitt dargestellt.
In Fig. 2 ist die Aufsicht auf eine Schraubkappe nach Fig. 1 wiedergegeben.
In Fig. 3 ist ein anderes Ausführungsbeispiel für eine Schraubkappe in der Darstellungsweise nach Fig. 1 wiedergegeben.
In Fig. 4 ist die Aufsicht auf eine Schraubkappe nach Fig. 3 dargestellt.

0045000

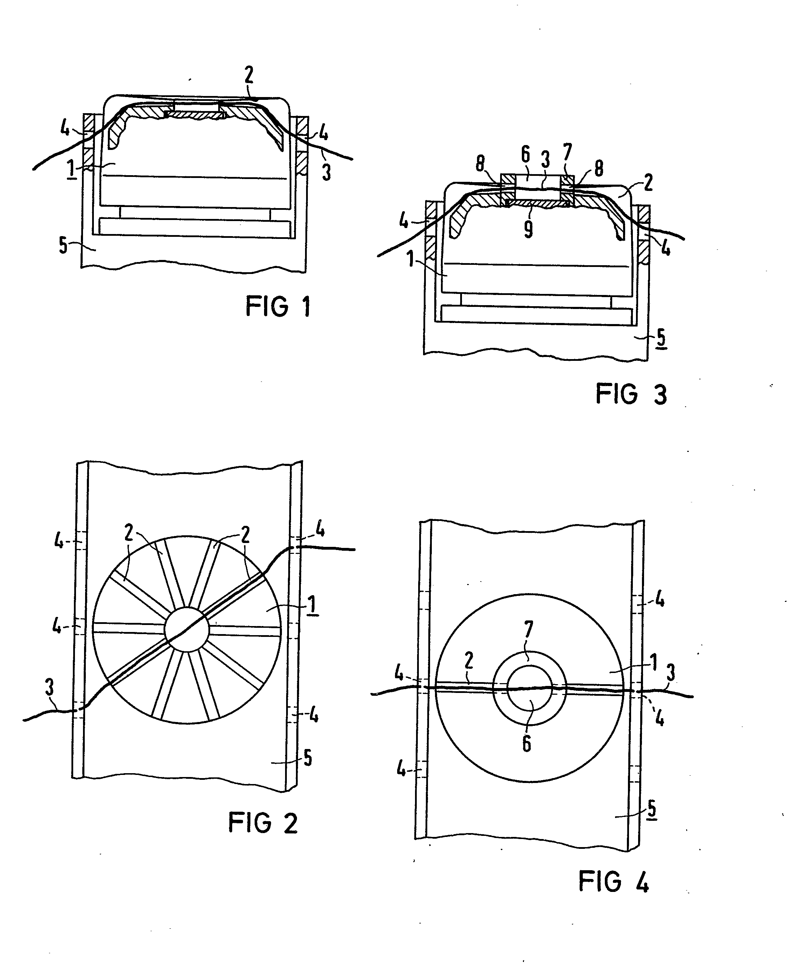

Auf der Stirnseite einer Schraubkappe 1 mit im wesentlichen zylindrischem Außenmantel, nach Fig. 1, ist zumindest ein Schlitz 2 in Durchmesserrichtung ausgebildet. Im Schlitz 2 ist ein Plombierdraht 3 eingelegt, der durch Bohrungen 4 einer ortsfesten Halterung, beispielsweise eines Sicherungsgehäuses 5, hindurchgezogen ist. Der Plombierdraht kann gespannt und mit einer Plombe versehen werden. Die Schraubkappe 1 ist dann gegen unbefugtes Drehen gesichert.

Der Schlitz 2 nach Fig. 1 weist zu seinem Rand hin zunehmende Tiefe auf, so daß bei entsprechend tiefliegenden Löchern 4 im Gehäuse 5 die Plombierung besonders wirkungsvoll gesichert ist.

Wie aus Fig. 2 zu ersehen ist, können eine Vielzahl von Schlitzen 2 in der Stirnseite der Schraubkappe 1 ausgebildet sein. Im Ausführungsbeispiel sind auch mehrere zugeordnete Löcher 4 im Gehäuse 5 vorgesehen, was in der Praxis die Plombierarbeit erleichtern kann.

Bei der Schraubkappe 1 nach Fig. 3 unterläuft der Schlitz 2 im Mittelfeld, das zugleich das Sichtloch 6, sein kann, einen Steg 7 tunnelartig. Im Ausführungsbeispiel ist im Mittelfeld ein ringförmiger Steg 7 ausgebildet, der ein Sichtloch 6 umrundet und zwei in Durchmesserrichtung gegenüberliegende Durchführungstunnel 8 bildet. Mit 3 ist wieder der Plombierdraht bezeichnet, der hier durch die Durchführungstunnel 8 gefädelt wird und durch die Bohrungen 4 festgelegt ist. Eine Glasscheibe zum Abschließen des Sichtloches hinsichtlich des Kopfkontaktes eines von der Schraubkappe abzudeckenden Sicherungseinsatzes ist mit 9 bezeichnet.

4 Patentansprüche
4 Figuren

Patentansprüche

1. Plombierbare Schraubkappe zum Abdecken der Sicherungs- einsätze von Schraubsicherungen, d a d u r c h g e - k e n n z e i c h n e t, daß bei Schraubkappen (1) mit im wesentlichen zylindrischem Außenmantel in der Stirnseite zumindest ein Schlitz (2) in Durchmesserrichtung ausgebildet ist.

2. Schraubkappe nach Anspruch 1, g e k e n n z e i c h - n e t; durch einen Schlitz (2) mit zum Rand hin zunehmender Tiefe.

3. Schraubkappe nach den Ansprüchen 1 und 2, d a - d u r c h g e k e n n z e i c h n e t, daß der Schlitz (2) im Mittelfeld der Stirnseite zumindest einen Steg (7) tunnelartig unterläuft.

4. Schraubkappe nach Anspruch 3, d a d u r c h g e - k e n n z e i c h n e t, daß im Mittelfeld ein ringförmiger Steg (7) ausgebildet ist, der ein Sichtloch (6) umrundet und zwei in Durchmesserrichtung gegenüber- liegende Durchführungstunnel (8) bildet.

FIG 1

FIG 3

FIG 2

FIG 4

Europäisches
Patentamt

**EUROPÄISCHER RECHERCHENBERICHT**

0045000
Nummer der Anmeldung

EP 81 10 5471

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>GB - A - 4 228 AD 1909</u> (MURRAY) <br><br> * Seite 1, Zeilen 22-30, 42-46; Seite 2, Zeilen 1-9, 15-21 * <br><br> -- | 1-4 |
| | <u>CH - A - 534 425</u> (GARDY) <br><br> * Spalte 1, Zeilen 53-68; Spalte 2, Zeilen 1,2,45-68; Spalte 4, Zeilen 21-24 * <br><br> -- | 1,3 |
| | <u>FR - A - 2 279 304</u> (F.A.E.A.M.) <br><br> * Seite 1, Zeilen 1-27; Seite 2, Zeilen 5-7,16,17,35-38; Seite 3, Zeilen 1-3; Seite 4, Zeilen 19-23 * <br><br> -- | 1,3 |
| | <u>DE - A - 1 588 815</u> (SHURTER) <br><br> * Seite 2, Zeilen 13-25; Seite 3, Absatz 1 * <br><br> -- | 1 |
| | <u>FR - A - 1 202 468</u> (C.E.P.I.) <br><br> * Abbildungen 1,3; Seite 1, Spalte 2, Zeilen 8-10, 33-40 * <br><br> ---- | 1 |

**KLASSIFIKATION DER ANMELDUNG (Int. Cl.³)**

H 01 H 85/24

**RECHERCHIERTE SACHGEBIETE (Int. Cl.³)**

H 01 H 85/24
85/02
85/00
85/52
85/62
85/20

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
, liegende Theorien oder
Grundsätze
E: kollidierende Anmeldung
D: in der Anmeldung angeführtes
Dokument
L: aus andern Gründen
angeführtes Dokument
&: Mitglied der gleichen Patentfamilie, übereinstimmendes
Dokument

Der vorliegende Recherchenbericht wurde für alle Patentansprüche erstellt.

| Recherchenort | Abschlußdatum der Recherche | Prüfer |
|---|---|---|
| Den Haag | 05-10-1981 | DESMET |

EPA form 1503.1 06.78